# NEW EUROPEAN PATENT SPECIFICATION

(11) **EP 2 221 132 B2**
(45) Date of publication and mention of the opposition decision: **23.10.2019**
(45) Mention of the grant of the patent: 30.11.2016
(21) Application number: 08842800.8
(22) Date of filing: 23.10.2008
(51) Int. Cl.: B22F 3/16, B22F 3/105

(54) **PRODUCTION DEVICE AND PRODUCTION METHOD OF METAL POWDER SINTERED COMPONENT**
HERSTELLUNGSVORRICHTUNG UND HERSTELLUNGSVERFAHREN FÜR EINE GESINTERTE METALLPULVERKOMPONENTE
DISPOSITIF ET PROCÉDÉ DE PRODUCTION D'UN COMPOSANT FRITTÉ OBTENU À PARTIR DE POUDRES MÉTALLIQUES

(30) Priority: 26.10.2007 JP 2007279567; 26.10.2007 JP 2007279551
(43) Date of publication of application: 25.08.2010
(73) Proprietor: Panasonic Intellectual Property Management Co., Ltd., Osaka-shi, Osaka 540-6207 (JP)
(72) Inventor: HIGASHI, Yoshikazu, Kadoma-shi Osaka 571-8686 (JP); FUWA, Isao, Kadoma-shi Osaka 571-8686 (JP); ABE, Satoshi, Kadoma-shi Osaka 571-8686 (JP); TOGEYAMA, Hirohiko, Kadoma-shi Osaka 571-8686 (JP); YOSHIDA, Norio, Kadoma-shi Osaka 571-8686 (JP); SHIMIZU, Takashi, Kadoma-shi Osaka 571-8686 (JP)
(74) Representative: Vossius & Partner Patentanwälte Rechtsanwälte mbB
(86) International application number: PCT/JP2008/069215
(87) International publication number: WO 2009/054445

(56) References cited:
- EP-A1- 1 583 628
- EP-A1- 1 661 657
- EP-A2- 1 348 506
- WO-A1-2004/056512
- DE-A1- 10 053 742
- JP-A- 2001 301 045
- JP-A- 2007 146 216
- JP-B1- 3 923 511
- JP-T- 2004 514 053
- US-A- 4 944 817
- US-A- 5 393 613
- US-A- 5 711 911
- US-A1- 2003 185 697
- US-A1- 2003 214 571
- US-A1- 2004 094 728
- US-A1- 2005 142 024
- US-B1- 6 450 180
- US-B2- 6 657 155
- US-B2- 6 676 892
- US-B2- 6 694 207

## Description

### TECHNICAL FIELD

The present invention relates to manufacturing equipment and manufacturing methods for forming a metal powder sintered component by irradiating metal powder with light beams.

### BACKGROUND ART

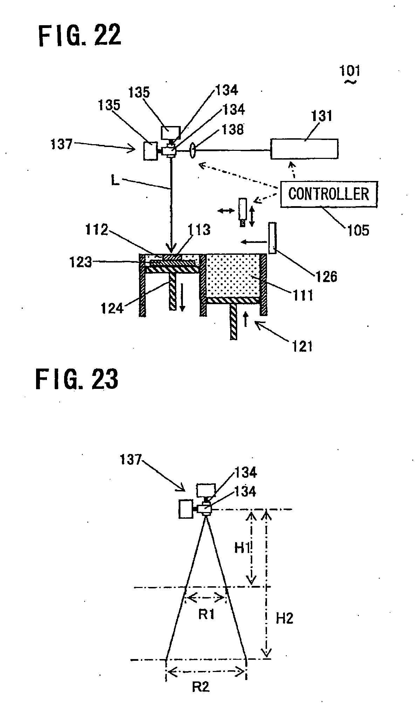

Equipment for manufacturing a metal powder sintered component by irradiating a powder layer, which is made of metal powder, with light beams to melt the powder layer for formation of a sintered layer and repeating the process of forming another powder layer on the sintered layer and irradiating it with light beams (hereinafter, referred to as manufacturing equipment) is known in the prior art. FIG. 22 shows a configuration of the manufacturing equipment. The manufacturing equipment 101 comprises a material tank 121 that supplies metal powder 111, a substrate 123 on which a powder layer 112 is placed, a formation table 124 that holds the substrate 123 and moves up and down, a wiper 126 that spreads the metal powder 111 contained in the material tank 121 onto the substrate 123, a light beam oscillator 131 that emits light beams L, a scan head 137 that directs light beams L emitted from the light beam oscillator 131 onto the powder layer 112 for scanning, and a controller 105 that controls the operation of the manufacturing equipment 101.

The scan head 137 comprises a condenser lens 138 that collects light beams L, two rotatable scan mirrors 134 that reflect light beams L, and a scanner 135 that controls the rotation angles of the scan mirrors 134. The controller 105 causes the light beam oscillator 131 to emit light beams L and collects the emitted light beams L by the condenser lens 138. Then, the controller 105 causes the scanner 135 to rotate the scan mirrors 134 so that the scan mirrors 134 reflect the collected light beams L onto the powder layer 112 to sinter the metal powder 111 and thus form a sintered layer 113.

However, in the manufacturing equipment, if the rotation angles of the scan mirrors 134 are increased to enlarge the irradiated area, focusing and so on become difficult and thus the accuracy of light beam L scanning is reduced. Further, since the irradiation height is fixed, the accuracy of light beam L scanning cannot be adjusted. FIG. 23 shows the relationship between the irradiation height and the irradiated area. When the irradiation height is changed from a height H1 to a height H2, the irradiated area increases from an irradiated area R1 to an irradiated area R2. However, the accuracy of light beam L scanning is reduced because the irradiation position is changed significantly by slight rotation of the scan mirrors 134.

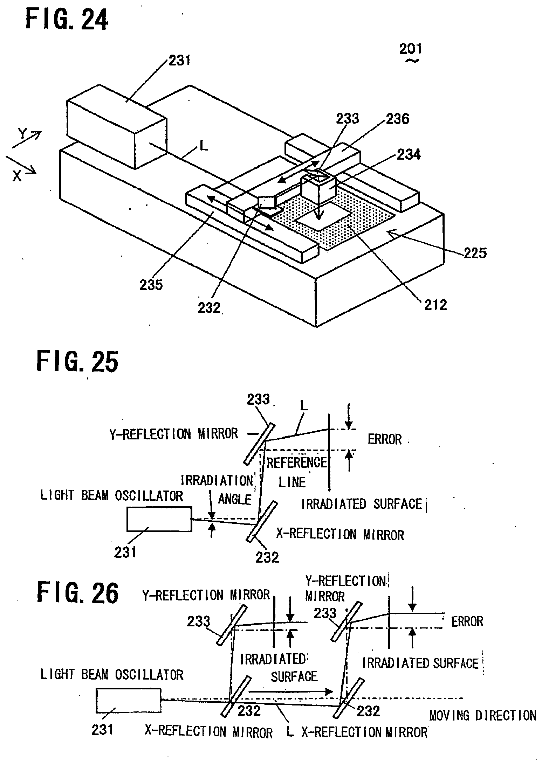

Plotter type manufacturing equipment is also known. FIG. 24 shows a configuration of the manufacturing equipment. The manufacturing equipment 201 comprises a light beam oscillator 231 that emits light beams L, two mirrors, an X-reflection mirror 232 and a Y-reflection mirror 233, that reflect light beams L, an optical component 234 that focuses reflected light beams L, a formation tank 225 where a powder layer 212 is placed, an X-movement shaft 235 that moves the X-refection mirror 232 in the X direction, and a Y-movement shaft 236 that moves the Y-reflection mirror 233 in the Y direction. Light beams L emitted from the light beam oscillator 231 are reflected by the X-reflection mirror 232 and the Y-reflection mirror 233, focused on the powder layer 212 by the optical component 234, and directed over the powder layer 212 for scanning by the X-movement shaft 235 and the Y-movement shaft 236.

However, in the manufacturing equipment 201, the accuracy of light beam L scanning is low. FIG. 25 shows the relationship between the irradiation angle of light beams L from the light beam oscillator 231 and the error in irradiation position. Since light beams L are large in optical axis length, even a slight deviation of the irradiation angle of light beams L from the light beam oscillator 231 causes a large error in irradiation position. FIG. 26 shows the relationship between the deviation of the optical axis of a light beam L from the moving direction of the X-reflection mirror 232 and the error in irradiation position. A slight deviation of the optical axis of the light beam L from the moving direction of the X-reflection mirror 232 causes a larger error in irradiation position as the travel distance becomes longer. A deviation of the optical axis of the light beam L from the moving direction of the Y-reflection mirror 233 also causes a large error in irradiation position.

Manufacturing equipment is also known in which a light beam oscillator and a scan head for directing light beams move in a single direction parallel to a powder layer for light beam scanning (see, for example, JP 2004-122489 A).

However, in the manufacturing equipment as disclosed in JP 2004-122489 A, the irradiated area cannot be increased because the light beam oscillator and the scan head for directing light beams move only in the single direction. EP 1 661 657 A1 discloses a laser processing robot system including a manipulator, a laser processing tool attached to the manipulator, and a control unit for controlling operations of the manipulator and the laser processing tool. The laser processing tool includes a laser scan head with a movable mirror incorporated therein, and a movable support mechanism movably supporting the laser scan head. The control unit includes a rapid-traverse operation controlling section for controlling an operation of the movable support mechanism to make the laser scan head perform a rapid-traverse operation during a non-processing period when the laser scan head does not emit a laser beam. US 2004/0094728 A1 describes a device for sintering, removing material and/or labeling by means of electromagnetically bundled radiation, especially a laser sintering machine and/or a laser surface-processing machine. The device comprises a construction space which is accommodated in a machine housing and in which the following are provided: a scanner, into which the beam of a sintering laser is coupled; a vertically displaceable workpiece platform; and a material supply device comprising a coater for supplying sintering material in powder, paste or liquid form to the process area above the workpiece platform, from a supply container. EP 1 583 628 A1 describes an arrangement for producing a three-dimensional product, which arrangement comprises a work table on which said three-dimensional product is to be built up, a powder dispenser which is arranged so as to distribute a thin layer of powder on the work table for forming a powder bed, a radiation gun for delivering energy to the powder, fusing together of the powder then taking place, means for guiding the beam emitted by the radiation gun over said powder bed for forming a cross section of said three-dimensional product by fusing together parts of said powder bed, and a control computer in which information about successive cross sections of the three-dimensional product is stored, which cross sections build up the three-dimensional product, where the control computer is intended to control said means for guiding the radiation gun over the powder bed according to an operating scheme forming a cross section of said three-dimensional body, said three-dimensional product being formed by successive fusing together of successively formed cross sections from by the powder dispenser, and method for producing a three-dimensional product using such an arrangement.

### DISCLOSURE OF THE INVENTION

### PROBLEM TO BE SOLVED BY THE INVENTION

The present invention has been made to solve the above described problems. An object of the present invention is to provide manufacturing equipment and manufacturing methods for a metal powder sintered component that can provide a large irradiated area and a high accuracy in light beam scanning as well as allowing the accuracy of light beam scanning to be adjusted as the need arises.

### MEANS FOR SOLVING THE PROBLEM

In order to achieve the above mentioned object, the present invention provides a method of manufacturing a metal powder sintered component according to claim 1.

According to the present invention, the irradiated area can be increased because the scan head moves parallel to the irradiated surface, and, by setting the irradiation height small, the accuracy of light beam scanning can be enhanced. Further, the scan head can move in the direction normal to the irradiated surface so as to change the irradiation height. Therefore, by changing the irradiation height of the scan head, the accuracy of light beam scanning can be adjusted.

It is preferable that the manufacturing equipment comprises cutting means that repeatedly cuts a surface layer of a surface part and an unwanted part of the shaped object at least one time in process of the formation of the shaped object, the cutting means has a milling head that moves in a direction parallel to and in a direction normal to the irradiated surface, and the scan head moves by milling head moving means that moves the milling head. Thereby, since the scan head is fixed on the milling head for movement, the configuration of the manufacturing equipment for a metal powder sintered component can be simplified and the cost can be reduced.

The controller has: first adjustment data to adjust, to set values, a light beam irradiation position and a diameter of focused light beams in a case where the scan head is positioned at an irradiation height closest to the irradiated surface; and second adjustment data to adjust, to set values, a light beam irradiation position and a diameter of focused light beams in a case where the scan head is positioned at an irradiation height farthest from the irradiated surface, and adjustment data for a case where the scan head is positioned at an arbitrary irradiation height is determined by interpolation from the first adjustment data and the second adjustment data, so that irradiation with light beams is performed using the determined adjustment data. This can make it easy to determine adjustment data to adjust, to set values, the light beam irradiation position and the diameter of focused light beams for an arbitrary irradiation height of the scan head, thus enhancing the accuracy of light beam scanning.

It is preferable that the scan head irradiates a surface portion of a shaped object with light beams from a position close to the irradiated surface, and irradiates a center portion of a shaped object with light beams from a position far from the irradiated surface. Thereby, since the surface portion of a shaped object is irradiated with light beams from a position close to the irradiated surface, the accuracy of light beam scanning can be enhanced. This can reduce the cutting amount of the surface of a shaped object, thus decreasing the cutting time to shorten the machining time. Further, for the center portion of a shaped object, the scan accuracy and the sintered density can be low. Therefore, the portion can be irradiated from a position far from the irradiated surface so as to increase the scanning speed and thus shorten the machining time.

It is preferable that the controller causes the scan head to perform irradiation with light beams from a number of irradiation heights set in advance based on adjustment data according to the respective irradiation heights to adjust light beam irradiation positions and diameters of focused light beams to set values. Thereby, since irradiation with light beams is performed from a number of irradiation heights set in advance, the condition of irradiation with light beams can be easily changed according to the need for the accuracy and speed of scanning of a shaped object, so that the machining time can be shortened.

The irradiated surface is divided into a number of formation areas, and the scan head is moved to formation areas not adjacent to each other in turn within the divided formation areas, for irradiation with light beams. Thereby, since formation areas not adjacent to each other are irradiated with light beams in turn, sintering heat is prevented from accumulating in the shaped object so as to prevent heat strain of the shaped object and thus enhance the processing accuracy of the shaped object.

The irradiated surface is divided into a number of formation areas, and the scan head is moved in turn in the divided formation areas for irradiation with light beams, and the division is made so that a boundary between formation areas of a sintered layer formed under an irradiated surface does not overlap a boundary between formation areas of the irradiated surface. Thereby, since the irradiated surface is divided so that a boundary between formation areas of a sintered layer formed under the irradiated surface does not overlap a boundary between formation areas of the irradiated surface, the strength between the formation areas in the shaped object can be increased.

It is preferable that the irradiated surface is sectionalized into configuration areas corresponding to a center portion, a surface portion, and an intermediate portion between the center portion and the surface portion, respectively, of a shaped object to be formed, each of the configuration areas sectionalized is further divided into a number of formation areas, and the scan head is moved to formation areas not adjacent to each other in turn within the divided formation areas, for irradiation with light beams. Thereby, since the irradiated surface is divided into a number of formation areas and the irradiation height can be set according to the formation areas, the scan accuracy for the surface portion of a shaped object can be increased by setting the irradiation height small. Further, since formation areas not adjacent to each other are irradiated with light beams in turn, sintering heat is prevented from accumulating in the shaped object so as to prevent heat strain of the shaped object. Accordingly, a large object can be formed with a high degree of accuracy.

It is preferable that the irradiated surface is sectionalized into configuration areas corresponding to a center portion, a surface portion, and an intermediate portion between the center portion and the surface portion, respectively, of a shaped object to be formed, each of the configuration areas sectionalized is further divided into a number of formation areas, and the scan head is moved to formation areas not adjacent to each other in turn within the divided formation areas, for irradiation with light beams, and the division is made so that a boundary between formation areas of a sintered layer formed under the irradiated surface does not overlap a boundary between formation areas of the irradiated surface. This can increase the strength between the formation areas, thus making the shaped object firm.

### BEST MODES FOR CARRYING OUT THE INVENTION

### (First Embodiment)

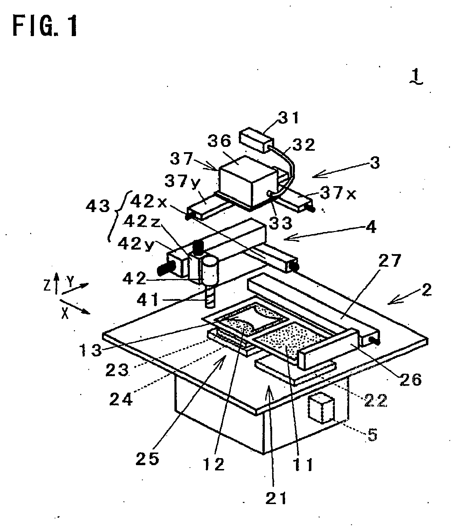

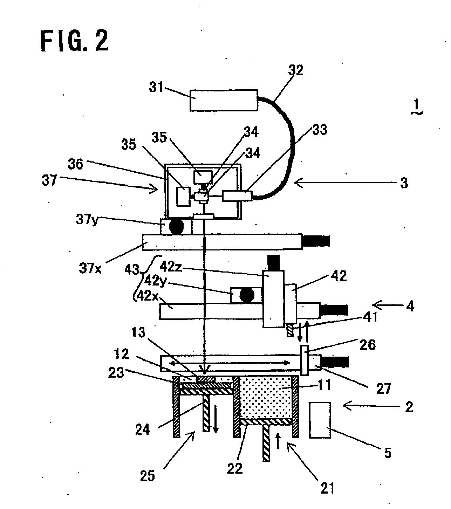

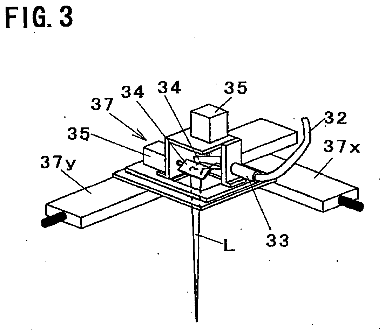

Referring to FIG. 1 to FIG. 4, manufacturing equipment for a metal powder sintered component (hereinafter, referred to as manufacturing equipment) according to a first embodiment of the present invention is described. In FIG. 1 to FIG. 3, the manufacturing equipment 1 comprises a powder layer forming portion (powder layer forming means) 2 that supplies metal powder 11 and forms a powder layer 12, a light beam irradiator (light beam irradiation means) 3 that irradiates a given point on a powder layer 12, which is formed by the powder layer forming portion 2, with light beams so as to sinter the powder layer 12 and thus form a sintered layer 13, a cutter (cutting means) 4 that cuts a three-dimensionally shaped object in which sintered layers 13 are integrally stacked, and a controller 5 that controls the operation of each portion. In this specification, a metal powder sintered component in process is referred to as a shaped object.

The powder layer forming portion 2 has a material tank 21 that supplies metal powder, a material table 22 that moves metal powder in the material tank 21 upward, a substrate 23 on which a powder layer 12 is placed, a formation table 24 that holds the substrate 23 and moves up and down, a formation tank 25 that surrounds the formation table 24, a wiper 26 that spreads the metal powder contained in the material tank 21 onto the substrate 23, and a wiper moving shaft 27 that moves the wiper 26. The light beam irradiator 3 has a light beam oscillator 31 that emits light beams, an optical fiber 32 that transmits light beams L emitted, and an optical component 33 that includes a condenser lens (not shown) and collects light beams L received from the optical fiber 32. The light beam oscillator 31 is an oscillator for e.g., carbon dioxide laser, YAG laser, or fiber laser. The light beam irradiator 3 further comprises two rotatable scan mirrors 34 that reflect light beams L from the optical component 33, and a scanner 35 that controls the rotation angles of the scan mirrors 34. The controller 5 adjusts the rotation angles of the scan mirrors 34 via the scanner 35 to direct light beams L over a powder layer 12 for scanning. The optical component 33, the scan mirrors 34, and the scanner 35 are covered by an optical cover 36 and make up a scan head 37 together with the optical cover 36.

The scan head 37 moves in a direction parallel to the surface irradiated with light beams by a scan head X shaft 37x, which is parallel to the irradiated surface and moves in the X direction, and a scan head Y shaft 37y, which is parallel to the irradiated surface and moves in the Y direction. The cutter 4 comprises a cutting tool 41 that cuts a shaped object and a milling head 42 that rotates and holds the cutting tool 41. The milling head 42 is fixed on a milling head Z shaft 42z, and moves in a direction normal to and in a direction parallel to the surface irradiated with light beams by the milling head Z shaft 42z, a milling head X shaft 42x, and a milling head Y shaft 42y The milling head Z shaft 42z, the milling head X shaft 42x, and the milling head Y shaft 42y make up a milling head moving portion (milling head moving means) 43. The surface irradiated with light beams is covered by a chamber (not shown), which is filled with inert gas such as nitrogen gas so as to prevent oxidation of metal powder. The supply of inert gas is controlled by measuring the level of oxygen or the like within the chamber.

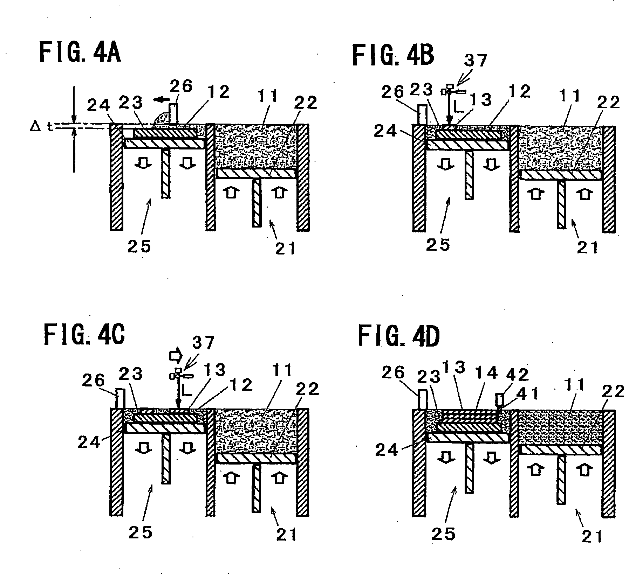

The operation of the manufacturing equipment 1 configured as described above is described. FIGS. 4A to 4D show the operation in sequence. First, the formation table 24 is moved down so that the difference in level between the top face of the substrate 23 and the top face of the formation tank 25 reaches Δt in length, and the metal powder 11 on the material table 22 is supplied onto the substrate 23 by the wiper 26 so as to form a powder layer 12 (FIG. 4A).

Subsequently, the scan head 37 rotates the scan mirrors to direct light beams L over an area of the powder layer 12 for scanning so that the powder layer 12 is melted to form a sintered layer 13 (FIG. 4B). The scan head 37 then moves to another area of the powder layer 12 by the scan head X shaft and the scan head Y shaft, and irradiates the area with light beams L to form the sintered layer 13 (FIG. 4C). Subsequently, the scan head 37 repeats the operation of FIGS. 4A to 4C so as to repeatedly form powder layers 12 and sintered layers 13, so that the sintered layers 13 are stacked. When sintered layers 13 reach a given thickness, the surface layer of a surface part and an unwanted part of the shaped object are cut by the cutting tool 41 of the milling head 42 (FIG. 4D). This process is repeated to manufacture a metal powder sintered component.

According to the manufacturing equipment 1, since the scan head 37 can be moved in a direction parallel to the irradiated surface, a large area can be scanned while a short distance is maintained between the scan head 37 and the irradiated surface. Thus, a large metal powder sintered component can be manufactured. The short distance between the scan head 37 and the irradiated surface can prevent a reduction in the accuracy of light beam L scanning, thus enhancing the dimensional accuracy of a shaped object. Since the dimensional accuracy of a shaped object is high, the amount of cutting by the cutting tool 41 can be reduced so that the cutting time can be reduced to shorten the machining time.

### (Second Embodiment)

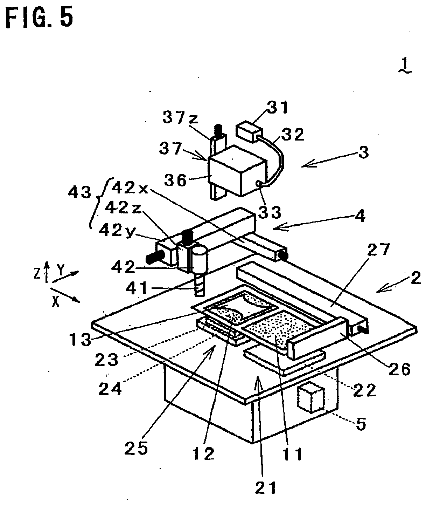

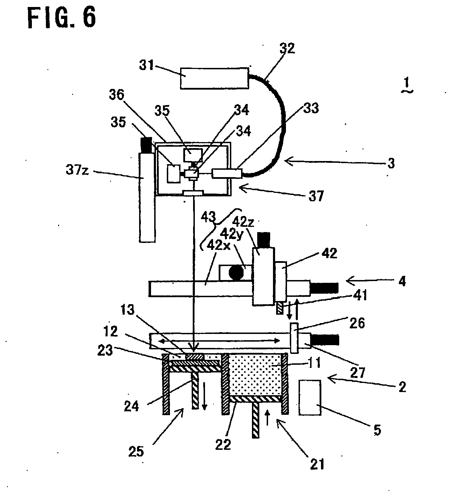

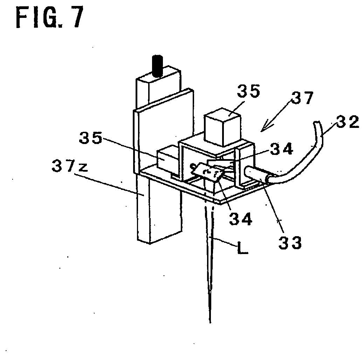

Referring to FIG. 5 to FIG. 10, a second embodiment of the present invention is described. In manufacturing equipment 1 according to this embodiment, a scan head 37 moves not in a direction parallel to the irradiated surface but in a direction normal thereto, unlike the first embodiment. Components like those in the above described embodiment are denoted by like numerals in the drawings and will not be further explained (the same shall apply hereinafter). In FIG. 5 to FIG. 7, the scan head 37 moves in a direction normal to the surface irradiated with light beams by a scan head 37z.

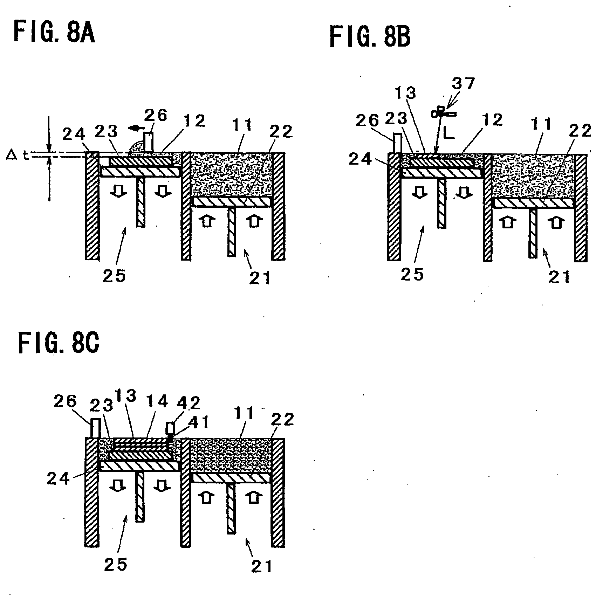

The operation of the manufacturing equipment 1 configured as described above is described. FIGS. 8A to 8C show the operation in sequence. First, like FIG. 4A in the first embodiment, a powder layer 12 is formed on a substrate 23 (FIG. 8A).

Subsequently, the scan head 37 rotates scan mirrors to direct light beams L over the powder layer 12 for scanning so that the powder layer 12 is melted to form a sintered layer 13 (FIG. 8B). The scan head 37 then repeats the operation of FIGS. 8A and 8B so as to repeatedly form powder layers 12 and sintered layers 13, so that the sintered layers 13 are stacked. When sintered layers 13 reach a given thickness, the surface layer of a surface part and an unwanted part of the shaped object are cut by a cutting tool 41 of a milling head 42 (FIG. 8C). This process is repeated to manufacture a metal powder sintered component.

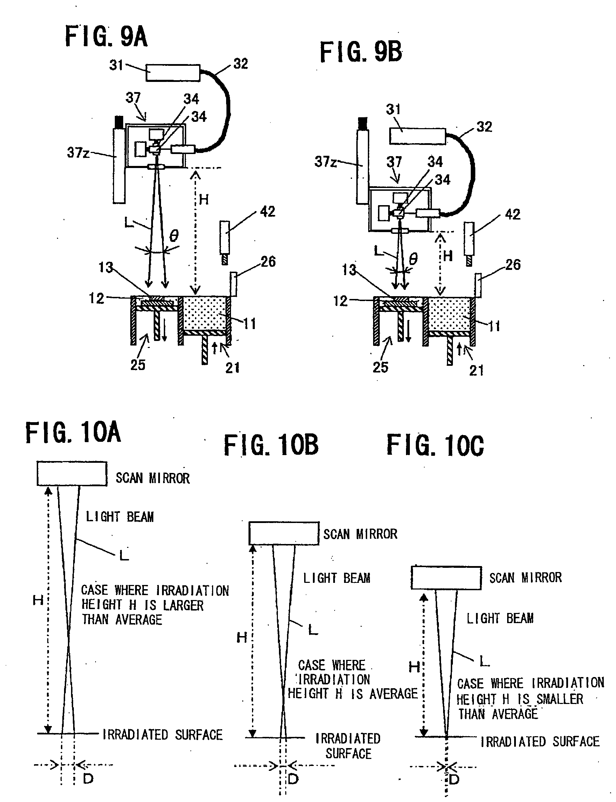

FIGS. 9A and 9B show the relationship between the irradiation height H of the scan head 37 and the accuracy of light beam L scanning. FIG. 9A shows a case where the irradiation height H of the scan head 37 is large while FIG. 9B shows a case where the irradiation height H is small. If a light beam L directed from the scan head 37 is deviated by the same angle θ, the larger irradiation height H results in a lower accuracy of light beam L scanning because the amplitude of the light beam L is larger.

By varying the irradiation height of the scan head 37 in this manner, the accuracy of light beam L scanning can be varied. If scanning with a high degree of accuracy is needed, the irradiation height H of the scan head 37 is set small. If high scanning accuracy is not needed, the irradiation height H of the scan head 37 is set large for irradiation with light beams L.

FIGS. 10A to 10C show the relationship between the irradiation height H of the scan head 37 and the diameter D of focused light beams L. FIG. 10A shows the diameter D of focused light beams in the case where the irradiation height H of the scan head 37 is larger than average, FIG. 10B shows the diameter D of focused light beams in the case where the irradiation height H is average, and FIG. 10C shows the diameter D of focused light beams in the case where the irradiation height H is smaller than average. When the irradiation height H is larger than average, the diameter D of focused light beams is larger than that in the case where the irradiation height H is average. When the irradiation height H is smaller than average, the diameter D of focused light beams is smaller than that in the case where the irradiation height H is average. The diameter D of focused light beams can be easily controlled by changing the irradiation height H while maintaining the condenser lens and the like in the same condition. In this manner, the accuracy of light beam L scanning and the diameter of focused light beams can be easily controlled by varying the irradiation height H according to the needs of a shaped object. Thus, the machining time can be reduced.

### (Third Embodiment)

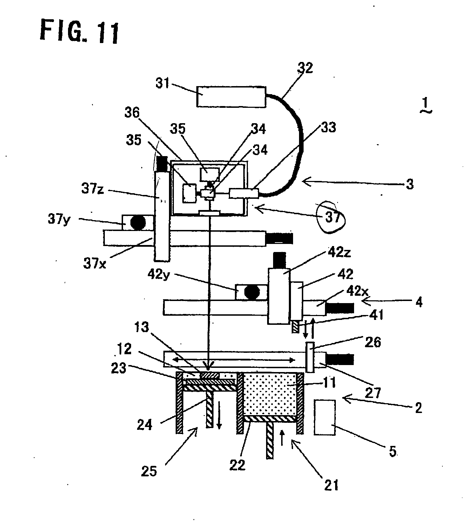

Referring to FIG. 11, a third embodiment of the present invention is described. In manufacturing equipment 1 according to this embodiment shown in FIG. 11, a scan head 37 moves in a direction parallel to and in a direction normal to the irradiated surface. A scan head Z shaft 37z is connected to a scan head Y shaft 37y, and the scan head 37 is held on the scan head Z shaft 37z. With this configuration, since the scan head 37 can move not only in a direction parallel to the irradiated surface but also in a direction normal to the irradiated surface, effects similar to those of the above described first and second embodiments can be achieved.

### (Fourth Embodiment)

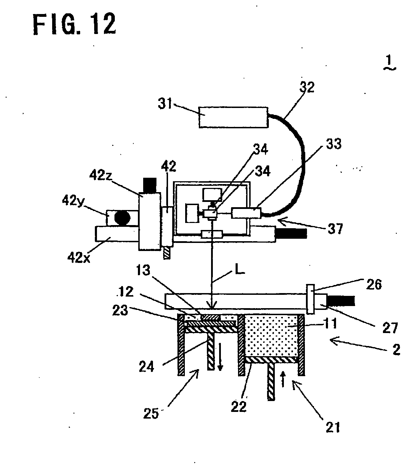

Referring to FIG. 12, a fourth embodiment of the present invention is described. In FIG. 12, a scan head 37 according to this embodiment is fixed on a milling head 42. The scan head 37 moves in a direction parallel to and in a direction normal to the surface irradiated with light beams by a milling head X shaft 42x, a milling head Y shaft 42y, and a milling head Z shaft 42z.

As described above, the scan head 37 is fixed on the milling head 42 for movement. This can eliminate the need for a scan head X shaft, a scan head Y shaft, and a scan head Z shaft to move the scan head 37, thus simplifying the configuration of the manufacturing equipment and reducing the cost. Further, since the scan head 37 is not needed during the process of cutting a surface part or the like of a shaped object, it can be detached from the milling head 42 before the start of the cutting process and can be attached to the milling head 42 before irradiation with light beams L after the completion of the cutting process. If the scan head 37 is detached during the cutting process in this manner, the scan head 37 is less likely to be damaged by a rapidly accelerated motion of the milling head 42 during the cutting process.

### (Embodiment of the invention)

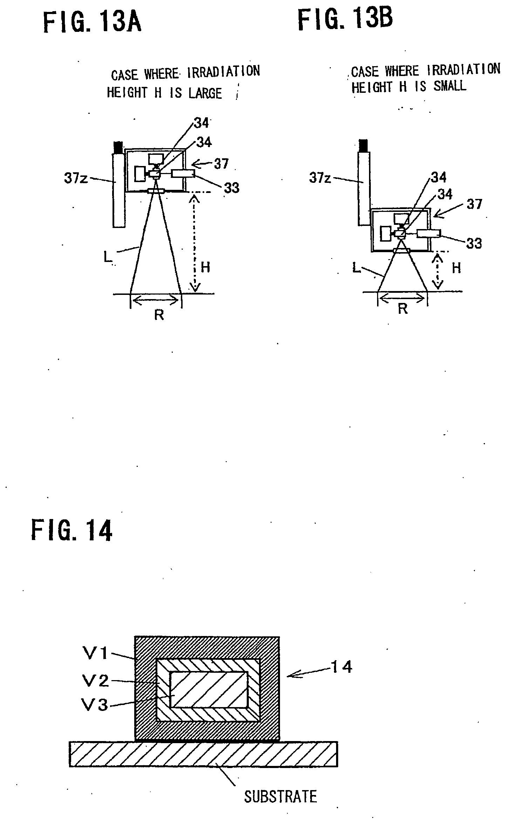

Referring to FIG. 13, the present invention is described. FIGS. 13A and 13B show the conditions of irradiation with light beams from a scan head 37, wherein FIG. 13A shows a condition with the largest irradiation height H, and FIG. 13B shows a condition with the smallest irradiation height H. Manufacturing equipment according to this embodiment is similar in configuration to the third embodiment. When the irradiation height H of the scan head 37 is changed for irradiation with light beams L, a controller in the manufacturing equipment needs to adjust the light beam L irradiation position and the diameter D of focused light beams to set values according to the irradiation height H of the scan head 37. The adjustment of the irradiation position is made by the rotation angles of scan mirrors 34, and the adjustment of the diameter D of focused light beams is made by the position of a condenser lens in an optical component 33 and so on.

In the invention, adjustment data (ΔX, ΔY) on the irradiation position and adjustment data (ΔZ) on the diameter of focused light beams at the position with the largest irradiation height H and the position with the smallest irradiation height H are determined. The adjustment data at the position with the largest irradiation height H is set as a first adjustment data, and the adjustment data at the position with the smallest irradiation height H is set as a second adjustment data. The adjustments are made with the same irradiated area R and diameter of focused light beams. Then, adjustment data for an arbitrary height H of the scan head 37 is determined by interpolation from the first adjustment data and the second adjustment data, according to the height. For example, when Δ*X* of the first adjustment data is 0.1 mm and Δ*X* of the second adjustment data is 0.2 mm, adjustment data Δ*X* for the case where the irradiation height is just intermediate between the highest and the lowest is 0.15 mm. In this manner, adjustment data to adjust, to set values, the light beam L irradiation position and the diameter of focused light beams for an arbitrary irradiation height H of the scan head 37 can be easily determined, which can enhance the accuracy of light beam L scanning.

### (Sixth Embodiment)

Referring to FIG. 14, a sixth embodiment of the present invention is described. FIG. 14 shows a vertical section of a shaped object. Manufacturing equipment according to this embodiment is similar in configuration to the third embodiment. In this embodiment, irradiation with light beams is performed as described below. A shaped object 14 is sectionalized into configuration areas of a surface portion V1, a center portion V3, and an intermediate portion V2 between the surface portion and the center portion. Then, the sintered density is varied depending on the configuration areas so that the density in the surface portion V1 is 98% or more, the density in the intermediate portion V2 is 70-90%, and the density in the center portion V3 is 60-80%. The sintered density can be varied by the diameter of focused light beams.

The irradiation height for the surface portion V1 is set small because the portion should be scanned with a high degree of accuracy in order to reduce the amount of surface cutting after the formation. By setting the irradiation height small to reduce the diameter of focused light beams, the irradiation energy per unit area is increased to increase the sintered density For the center portion V3, the irradiation height is set large because the dimensional accuracy of the shaped object is not affected even if the irradiation position deviates and thus the scan accuracy can be low. By setting the irradiation height large to increase the diameter of focused light beams, the irradiation energy per unit area is decreased to decrease the sintered density Further, since the irradiation height is large, the light beam scanning speed is high so as to decrease the sintered density even if the angular velocity of rotation of the scan mirrors is the same as that in the case where the irradiation height is small. The intermediate portion V2 is irradiated with an irradiation height between the irradiation height for the irradiation of the surface portion V1 and the irradiation height for the irradiation of the center portion V3. The sintered density may also be varied by the laser output, the scanning speed, or the scanning pitch.

As described above, for the surface portion of a shaped object, the accuracy of light beam scanning is high because the irradiation is performed with the small irradiation height. Since scanning with a high degree of accuracy reduces the surface cutting amount, the cutting time can be reduced to shorten the machining time. Further, for the center portion of a shaped object, the scan accuracy and the sintered density can be low. Therefore, the irradiation height can be set large to increase the scanning speed so that the machining time can be shortened.

### (Seventh Embodiment)

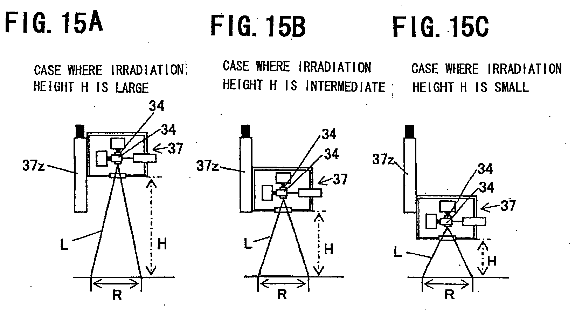

Referring to FIG. 15, a seventh embodiment of the present invention is described. FIGS. 15A to 15C show the conditions of irradiation with light beams from a scan head 37. Manufacturing equipment according to this embodiment is similar in configuration to the third embodiment. In this embodiment, a number of irradiation heights are set in advance, and the scan head performs irradiation with light beams based on adjustment data according to the respective irradiation heights. FIG. 15 shows a case where three levels are set as irradiation heights, wherein FIG. 15A shows the condition of irradiation in the case where the irradiation height H is large, FIG. 15B shows the condition of irradiation in the case where the irradiation height H is intermediate, and FIG. 15C shows the condition of irradiation in the case where the irradiation height H is small. For each of the irradiation heights, adjustment data (ΔX, ΔY) on the irradiation position and adjustment data (ΔZ) on the diameter of focused light beams are determined. The adjustments are performed with the same irradiated area R and diameter of focused light beams. Then, irradiation with light beams is performed at a high position in the case where irradiation at high speed is needed, at a low position in the case where irradiation with a high degree of accuracy is needed, and at an intermediate position in the case where irradiation in average condition is needed.

As described above, since irradiation with light beams is performed from a number of irradiation heights set in advance, the condition of irradiation with light beams can be easily changed according to the need for the accuracy and speed of scanning of a shaped object. Thus, the machining time can be shortened.

### (Eighth Embodiment)

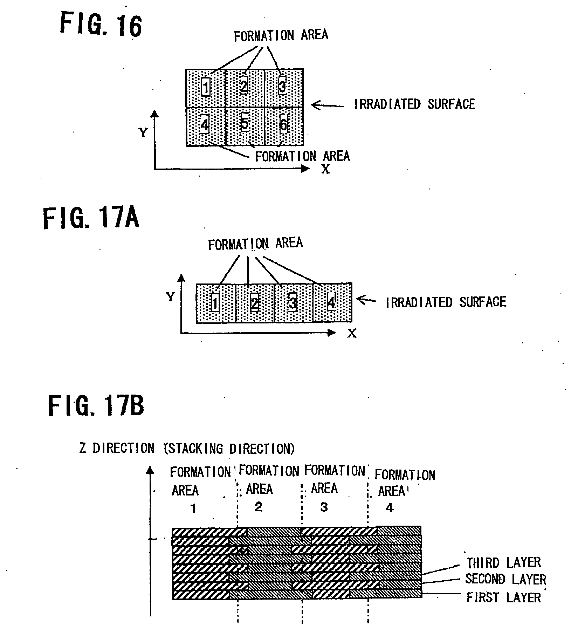

Referring to FIG. 16, an eighth embodiment of the present invention is described. FIG. 16 shows an irradiated surface. The irradiated surface is divided into a number of formation areas. The numerals shown in the formation areas are formation area numbers for description (the same shall apply hereinafter). In this embodiment, the irradiated surface is divided into the number of formation areas, within which a scan head is moved to formation areas not adjacent to each other in turn by a scan head X shaft and a scan head Y shaft, and the scan mirrors are rotated to direct light beams over the formation areas for scanning. In the irradiated surface of FIG. 16, irradiation with light beams is repeated for the formation areas in the order of, for example, the numbers "1", "5", "3", "4", "2", and "6". Since formation areas not adjacent to each other are irradiated with light beams in turn, sintering heat is prevented from accumulating in the shaped object so as to prevent heat strain of the shaped object and thus enhance the dimensional accuracy of the shaped object.

Referring to FIG. 17 to FIG. 19, a first modified example of the eighth embodiment is described. FIG. 17A shows an irradiated surface and FIG. 17B shows a vertical section of the shaped object. In this modified example, the irradiated surface is divided into a number of formation areas, within which a scan head is moved in turn to scan the formation areas with light beams. This division is made so that a boundary between formation areas of a sintered layer formed under the irradiated surface does not overlap a boundary between formation areas of the irradiated surface to be irradiated with light beams. In FIGS. 17A and 17B, irradiation with light beams is repeated in the order of the formation area numbers "1", "3", "2", and "4". As shown in FIG. 17B, the boundaries between the formation areas are different in position between sintered layers stacked one on top of the other, so that the boundaries do not overlap between sintered layers vertically adjacent to each other.

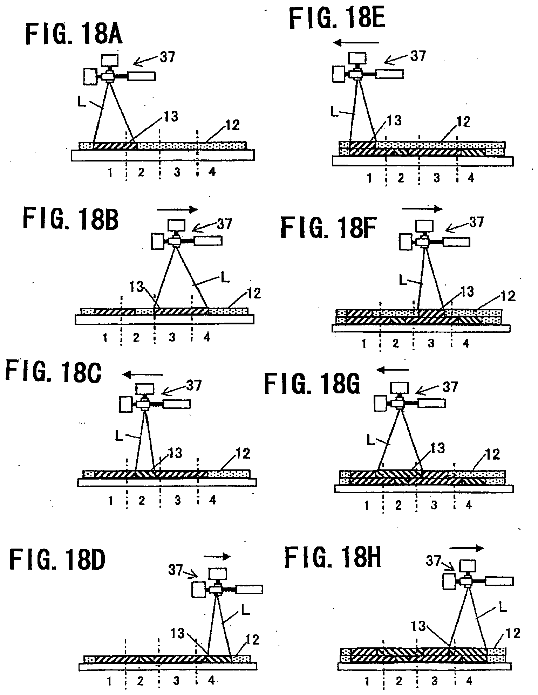

FIG. 18 shows irradiation with light beams in sequence. A scan head 37 is first positioned above the formation area "1", and irradiates the formation area "1" with light beams (FIG. 18A). Then, the scan head 37 moves to above the formation area "3", and irradiates the formation area "3" with light beams (FIG. 18B). Subsequently, the scan head 37 irradiates the formation areas "2" and "4" with light beams in like manner to sinter the first layer (FIGS. 18C and 18D). Subsequently, the formation area "1" in the second layer is irradiated with light beams so that the boundary between the formation area "1" and the formation area "2" is not aligned with the boundary in the first layer (FIG. 18E). Then, the scan head 37 moves to above the formation area "3" and irradiates the formation area "3" with light beams so that the boundary is not aligned with that in the first layer (FIG. 18F). Subsequently, the formation areas "2" and "4" are irradiated with light beams in like manner to sinter the second layer (FIGS. 18G and 18H).

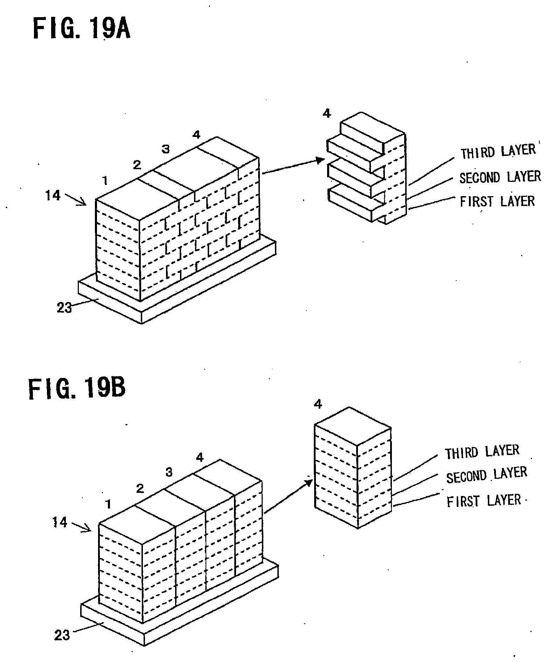

FIG. 19A shows a shaped object 14 formed in the above manner, and FIG. 19B shows a shaped object 14 with the boundaries between formation areas in sintered layers aligned. As described above, since the irradiated surface is divided so that a boundary between formation areas of a sintered layer formed under the irradiated surface does not overlap a boundary between formation areas of the irradiated surface, the strength between the formation areas in the shaped object can be increased.

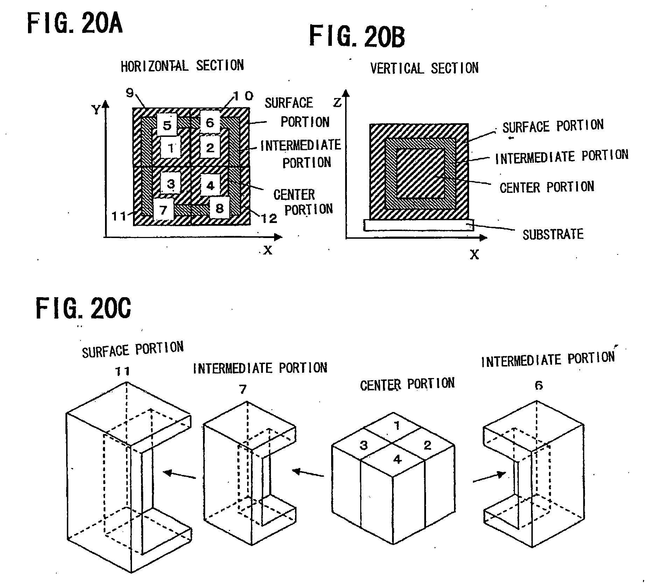

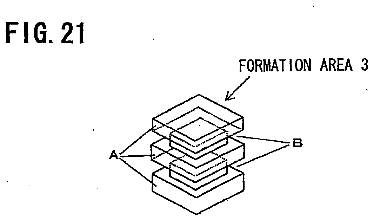

Referring to FIGS. 20 and 21, a second modified example of the eighth embodiment is described. FIG. 20A shows a horizontal section of a shaped object, FIG. 20B shows a vertical section of the shaped object, and FIG. 20C shows part of formation area in the shaped object that is separated. In this modified example, the irradiated surface is sectionalized into configuration areas corresponding to a center portion, a surface portion, and an intermediate portion between the center portion and the surface portion, respectively, in the shaped object to be formed at the irradiated surface. Each of the configuration areas sectionalized is further divided into a number of formation areas. Then, like the eighth embodiment, a scan head is moved to formation areas not adjacent to each other in turn within the divided formation areas, and the scan mirrors are rotated to direct light beams over the formation areas for scanning. Since formation areas not adjacent to each other are irradiated with light beams in turn, sintering heat is prevented from accumulating in the shaped object so as to prevent heat strain of the shaped object and thus enhance the dimensional accuracy of the shaped object.

In this modified example, irradiation with light beams is repeated in the order of, for example, the formation areas "1", "6", "9", "2", "8", "10", "4", "7", "12", "3", "5", and "11". Further, the sintered density is varied depending on the configuration areas so that the density in the surface portion is 98% or more, the density in the intermediate portion is 70-90%, and the density in the center portion is 60-80%. With respect to the irradiation height of light beams, a small irradiation height is set for the surface portion, a large irradiation height is set for the center portion, and an intermediate irradiation height is set for the intermediate portion, like the above described sixth embodiment. Thus, for the surface portion, since the irradiation height is small, the scan accuracy is high to decrease the diameter of focused light beams and thus increase the sintered density For the center portion, since the irradiation height is large, the scanning speed is increased while the sintered density is decreased. Accordingly, since heat strain of a shaped object can be prevented and the accuracy of light beam scanning for a surface portion of the shaped object can be increased, a large object can be formed with a high degree of accuracy

In this second modified example, the formation may be made so that a boundary between formation areas in a sintered layer already formed under the irradiated surface does not vertically overlap a boundary between formation areas in the irradiated surface to be irradiated with light beams, like the first modified example. FIG. 21 shows the shape of the formation area "3" of the center portion in FIG. 20C that is formed so that boundaries between formation areas in the irradiated surface do not overlap vertically. The formation area "3" has a portion A entering into an adjacent formation area and a portion B into which an adjacent formation area enters. The positions of the boundaries between the formation area "3" and other formation areas are different between sintered layers, so that the boundaries in sintered layers vertically adjacent to each other do not overlap but the formation areas are incorporated into each other. This can increase the strength between the formation areas, thus making the shaped object firm.

In addition, the present invention is not limited to the configurations of the above described embodiments, and various kinds of modification can be done in a scope without changing the purpose of the invention. For example, the inside of a chamber covering an irradiated surface may be under vacuum atmosphere. In this case, effects similar to those in the case where the chamber is filled with inert gas can be also achieved.

This application involves claim of priority based on Japanese Patent Application No. 2007-279551 and Japanese Patent Application No. 2007-279567. Entirety of description of the application is incorporated in this application by reference.

FIG. 1 is a perspective view of manufacturing equipment according to a first embodiment of the present invention.
FIG. 2 shows the configuration of the same equipment.
FIG. 3 is a perspective view of a light beam irradiator in the same equipment.
FIG. 4 illustrates a manufacturing method in sequence that is employed by the same equipment.
FIG. 5 is a perspective view of manufacturing equipment according to a second embodiment of the present invention.
FIG. 6 shows the configuration of the same equipment.
FIG. 7 is a perspective view of a light beam irradiator in the same equipment.
FIG. 8 illustrates a manufacturing method in sequence that is employed by the same equipment.
FIG. 9 shows the relationship between the irradiation height and the scan accuracy in the same equipment.
FIG. 10 shows the relationship between the irradiation height and the diameter of focused light beams in the same equipment.
FIG. 11 shows the configuration of manufacturing equipment according to a third embodiment of the present invention.
FIG. 12 shows the configuration of manufacturing equipment according to a fourth embodiment of the present invention.
FIG. 13 shows the conditions of irradiation with light beams in manufacturing equipment according to the present invention.
FIG. 14 shows a vertical section of a shaped object in manufacturing equipment according to a sixth embodiment of the present invention.
FIG. 15 shows the conditions of irradiation with light beams in manufacturing equipment according to a seventh embodiment of the present invention.
FIG. 16 shows an irradiated surface in manufacturing equipment according to an eighth embodiment of the present invention.
FIG. 17A shows an irradiated surface in a first modified example of the same equipment, and FIG. 17B shows a vertical section of a shaped object in the same modified example.
FIG. 18 illustrates a manufacturing method in sequence that is employed by the same modified example.
FIG. 19 is a perspective view of a shaped object in the same modified example.
FIG. 20A shows a horizontal section of a shaped object in a second modified example of the same equipment, FIG. 20B shows a vertical section of the shaped object, and FIG. 20C is a perspective view of the shaped object.
FIG. 21 is a perspective view of part of the shaped object.
FIG. 22 shows the configuration of conventional manufacturing equipment.
FIG. 23 shows the condition of irradiation with light beams in the same equipment.
FIG. 24 is a perspective view of another conventional manufacturing equipment.
FIG. 25 shows the relationship between the irradiation angle of a light beam and the irradiation position in the same equipment.
FIG. 26 shows the relationship between a deviation of the moving direction of a reflection mirror and the irradiation position in the same equipment.

## Claims

1. A method of manufacturing a metal powder sintered component using manufacturing equipment comprising: powder layer forming means that supplies metal powder to a substrate to form a powder layer; light beam irradiation means that irradiates a given point on the powder layer, which is formed by the powder layer forming means, with light beams so as to sinter the powder layer and thus form a sintered layer; and a controller that controls operations of the respective means, wherein a three-dimensionally shaped metal powder sintered component is manufactured by repeating formation of the powder layer and formation of the sintered layer to form a shaped object with a number of sintered layers integrated, **characterized in that**
the light beam irradiation means comprises a scan head having at least two scan mirrors that reflect and direct the light beams for scanning, angles of the scan mirrors being controllable,
the scan head moves in at least one direction of any direction parallel to a surface irradiated with the light beams and a direction normal to the irradiated surface,
the irradiated surface is divided into a number of formation areas, and the scan head is moved to formation areas not adjacent to each other in turn within the divided formation areas for irradiation with light beams, and
the division is made so that a boundary between formation areas of a sintered layer formed under an irradiated surface does not overlap a boundary between formation areas of the irradiated surface, and the boundaries do not overlap between sintered layers vertically adjacent to each other,
wherein the controller has: first adjustment data to adjust, to set values, a light beam irradiation position and a diameter of focused light beams in a case where the scan head is positioned at an irradiation height closest to the irradiated surface; and second adjustment data to adjust, to set values, a light beam irradiation position and a diameter of focused light beams in a case where the scan head is positioned at an irradiation height farthest from the irradiated surface, and
adjustment data for a case where the scan head is positioned at an arbitrary irradiation height is determined by interpolation from the first adjustment data and the second adjustment data, so that irradiation with light beams is performed using the determined adjustment data.

2. The method of manufacturing a metal powder sintered component according to claim 1, **characterized in that**
the manufacturing equipment comprises cutting means that repeatedly cuts a surface layer of a surface part and an unwanted part of the shaped object at least one time in process of the formation of the shaped object,
the cutting means has a milling head that moves in a direction parallel to and in a direction normal to the irradiated surface, and
the scan head moves by milling head moving means that moves the milling head.

3. The method of manufacturing a metal powder sintered component according to claim 1 or claim 2, **characterized in that**
the scan head irradiates a surface portion of a shaped object with light beams from a position close to the irradiated surface, and irradiates a center portion of a shaped object with light beams from a position far from the irradiated surface.

4. The method of manufacturing a metal powder sintered component according to claim 1 or claim 2, **characterized in that**
the controller causes the scan head to perform irradiation with light beams from a number of irradiation heights set in advance based on adjustment data according to the respective irradiation heights to adjust light beam irradiation positions and diameters of focused light beams to set values.

5. The method of manufacturing a metal powder sintered component according to claim 1 or claim 2, **characterized in that**
the irradiated surface is sectionalized into configuration areas corresponding to a center portion, a surface portion, and an intermediate portion between the center portion and the surface portion, respectively, of a shaped object to be formed, each of the configuration areas sectionalized is further divided into a number of formation areas, and the scan head is moved to formation areas not adjacent to each other in turn within the divided formation areas, for irradiation with light beams.

## Patentansprüche

1. Verfahren zum Herstellen eines Metallpulver-Sinterwerkstücks mittels einer Fertigungsanlage, die aufweist: ein Pulverschichtbildungsmittel, das einem Substrat ein Metallpulver zuführt, um eine Pulverschicht zu bilden; ein Lichtstrahl-Bestrahlungsmittel das einen gegebenen Punkt auf der Pulverschicht, die durch das Pulverschichtbildungsmittel gebildet wird, mit Lichtstrahlen bestrahlt, um die Pulverschicht zu sintern und so eine gesinterte Schicht zu bilden; und eine Steuereinrichtung, die den Betrieb der jeweiligen Mittel steuert, wobei ein dreidimensional geformtes Metallpulver-Sinterwerkstück durch wiederholte Bildung der Pulverschicht und Bildung der gesinterten Schicht hergestellt wird, um einen geformten Gegenstand mit einer Anzahl von integrierten gesinterten Schichten zu bilden, **dadurch gekennzeichnet, dass**
das Lichtstrahl-Bestrahlungsmittel einen Abtastkopf mit mindestens zwei Ablenkspiegeln aufweist, die die Lichtstrahlen zum Abtasten reflektieren und richten, wobei die Winkel der Ablenkspiegel steuerbar sind,
sich der Abtastkopf in mindestens eine Richtung irgendeiner Richtung parallel zu einer Oberfläche, die mit den Lichtstrahlen bestrahlt wird, und eine Richtung normal zur bestrahlten Oberfläche bewegt,
wobei die bestrahlte Oberfläche in eine Anzahl von Bildungsbereichen unterteilt ist, und der Abtastkopf zu Bildungsbereichen, die nicht zueinander benachbart sind, abwechselnd innerhalb der unterteilten Bildungsbereiche zur Bestrahlung mit Lichtstrahlen bewegt wird, und
die Unterteilung so vorgenommen wird, dass eine Grenze zwischen Bildungsbereichen einer gesinterten Schicht, die unter einer bestrahlten Oberfläche gebildet wird, sich nicht mit einer Grenze zwischen Bildungsbereichen der bestrahlten Oberfläche überlappt, und sich die Grenzen nicht zwischen gesinterten Schichten überlappen, die vertikal zueinander benachbart sind,
wobei die Steuereinrichtung aufweist: erste Einstelldaten, um eine Lichtstrahl-Bestrahlungsposition und einen Durchmesser von fokussierten Lichtstrahlen in einem Fall auf Sollwerte einzustellen, wo der Abtastkopf in einer Bestrahlungshöhe positioniert ist, die der bestrahlten Oberfläche am nächsten ist; und zweite Einstelldaten, um eine Lichtstrahl-Bestrahlungsposition und einen Durchmesser von fokussierten Lichtstrahlen in einem Fall auf Sollwerte einzustellen, wo der Abtastkopf in einer Bestrahlungshöhe positioniert ist, die von der bestrahlten Oberfläche am weitesten entfernt ist, und
Einstelldaten für einen Fall, wo der Abtastkopf in einer beliebigen Bestrahlungshöhe positioniert ist, durch eine Interpolation aus den ersten Einstelldaten und den zweiten Einstelldaten bestimmt werden, so dass eine Bestrahlung mit Lichtstrahlen mittels der bestimmten Einstelldaten durchgeführt wird.

2. Verfahren zum Herstellen eines Metallpulver-Sinterwerkstücks nach Anspruch 1, **dadurch gekennzeichnet, dass**
die Fertigungsanlage ein Schneidmittel aufweist, das mindestens ein Mal im Prozess der Bildung des geformten Gegenstands eine Oberflächenschicht eines Oberflächenteils und eines unerwünschten Teils des geformten Gegenstands wiederholt schneidet,
das Schneidmittel einen Fräskopf aufweist, der sich in eine Richtung parallel zur und in eine Richtung normal zur bestrahlten Oberfläche bewegt, und
sich der Abtastkopf durch ein Fräskopfbewegungsmittel bewegt, das den Fräskopf bewegt.

3. Verfahren zum Herstellen eines Metallpulver-Sinterwerkstücks nach Anspruch 1 oder 2, **dadurch gekennzeichnet, dass**
der Abtastkopf einen Oberflächenabschnitt eines geformten Gegenstands mit Lichtstrahlen von einer Position nahe der bestrahlten Oberfläche bestrahlt, und einen Mittelabschnitt eines geformten Gegenstands mit Lichtstrahlen von einer Position bestrahlt,
die von der bestrahlten Oberfläche weit entfernt ist.

4. Verfahren zum Herstellen eines Metallpulver-Sinterwerkstücks nach Anspruch 1 oder 2, **dadurch gekennzeichnet, dass**
die Steuereinrichtung den Abtastkopf veranlasst, eine Bestrahlung mit Lichtstrahlen aus einer Anzahl von Bestrahlungshöhen durchzuführen, die beruhend auf Einstelldaten gemäß den jeweiligen Bestrahlungshöhen im Voraus festgelegt werden, um Lichtstrahl-Bestrahlungspositionen und Durchmesser von fokussierten Lichtstrahlen auf Sollwerte einzustellen.

5. Verfahren zum Herstellen eines Metallpulver-Sinterwerkstücks nach Anspruch 1 oder 2, **dadurch gekennzeichnet, dass**
die bestrahlte Oberfläche in Konfigurationsbereiche geteilt ist, die einem Mittelabschnitt, einem Oberflächenabschnitt bzw. einem Zwischenabschnitt zwischen dem Mittelabschnitt und dem Oberflächenabschnitt eines geformten Gegenstands entsprechen, der gebildet werden soll, jeder der geteilten Konfigurationsbereiche ferner in Anzahl von Bildungsbereichen unterteilt ist, und der Abtastkopf zu Bildungsbereichen, die nicht zueinander benachbart sind, abwechselnd innerhalb der unterteilten Bildungsbereiche zur Bestrahlung mit Lichtstrahlen bewegt wird.

## Revendications

1. Procédé de fabrication d'un composant fritté à partir d'une poudre métallique au moyen d'un équipement de production comprenant : un moyen de formation d'une couche de poudre alimentant en poudre métallique un substrat pour former une couche de poudre ; un moyen d'irradiation par faisceaux lumineux irradiant par des faisceaux lumineux un point donné sur la couche de poudre formée par le moyen de formation d'une couche de poudre, de manière à fritter la couche de poudre et à former ainsi une couche frittée ; et un dispositif de commande commandant le fonctionnement des différents moyens, un composant tridimensionnel fritté à partir d'une poudre métallique étant produit en répétant la formation de la couche de poudre et la formation de la couche frittée afin de former un objet en relief présentant une pluralité de couches frittées intégrées, **caractérisé en ce que**
le moyen d'irradiation par faisceaux lumineux comporte une tête de balayage ayant au moins deux miroirs oscillants réfléchissant et dirigeant les faisceaux lumineux pour le balayage, l'inclinaison des miroirs oscillants pouvant être commandée,
la tête de balayage se déplace dans au moins une direction parmi les directions parallèles à une surface irradiée par les faisceaux lumineux et une direction normale à la surface irradiée,
la surface irradiée est divisée en une pluralité de zones de formation, et la tête de balayage est déplacée de manière alternée vers des zones de formation non adjacentes l'une à l'autre à l'intérieur des zones de formation divisées pour irradiation par des faisceaux lumineux, et
la division est réalisée de sorte qu'une limite entre zones de formation d'une couche frittée formée sous une surface irradiée ne chevauche pas une limite entre zones de formation de la surface irradiée, et que les limites ne se chevauchent pas entre couches frittées verticalement adjacentes l'une à l'autre,
dans lequel le dispositif de commande comprend : des premières données de réglage pour régler à des valeurs définies un emplacement d'irradiation d'un faisceau lumineux et un diamètre de faisceaux lumineux focalisés dans le cas où la tête de balayage est positionnée à la hauteur d'irradiation la plus proche de la surface irradiée ; et des deuxièmes données de réglage pour régler à des valeurs définies un emplacement d'irradiation d'un faisceau lumineux et un diamètre de faisceaux lumineux focalisés dans le cas où la tête de balayage est positionnée à la hauteur d'irradiation la plus éloignée de la surface irradiée, et
dans le cas où la tête de balayage est positionnée à une hauteur d'irradiation arbitraire, les données de réglage sont déterminées par interpolation des premières données de réglage et des deuxièmes données de réglage, de sorte que l'irradiation par faisceaux lumineux est exécutée au moyen des données de réglage déterminées.

2. Procédé de fabrication d'un composant fritté à partir d'une poudre métallique selon la revendication 1, **caractérisé en ce que**
l'équipement de production comporte un moyen de coupe découpant de manière répétée une couche d'une partie de surface et une partie indésirable de l'objet en relief, au moins une fois lors du processus de formation de l'objet en relief,
le moyen de coupe comporte une tête de fraisage se déplaçant dans une direction parallèle, et dans une direction normale à la surface irradiée, et
la tête de balayage se déplace avec le déplacement de la tête de fraisage par un moyen de déplacement de la tête de fraisage.

3. Procédé de fabrication d'un composant fritté à partir d'une poudre métallique selon la revendication 1 ou la revendication 2, **caractérisé en ce que**
la tête de balayage irradie une partie de surface d'un objet en relief par des faisceaux lumineux depuis un emplacement proche de la surface irradiée, et irradie une partie centrale d'un objet en relief par des faisceaux lumineux depuis un emplacement éloigné de la surface irradiée.

4. Procédé de fabrication d'un composant fritté à partir d'une poudre métallique selon la revendication 1 ou la revendication 2, **caractérisé en ce que**
le dispositif de commande entraîne l'exécution par la tête de balayage d'une irradiation par faisceaux lumineux depuis une pluralité de hauteurs d'irradiation fixées d'avance sur la base de données de réglage en fonction de hauteurs d'irradiation respectives pour régler à des valeurs définies les positions d'irradiation d'un faisceau lumineux et les diamètres des faisceaux lumineux focalisés.

5. Procédé de fabrication d'un composant fritté à partir d'une poudre métallique selon la revendication 1 ou la revendication 2, **caractérisé en ce que**
la surface irradiée est sectionnée en zones de configuration correspondant à une partie centrale, une partie de surface et une partie intermédiaire entre la partie centrale et la partie de surface d'un objet en relief à former, chacune des zones de configuration étant en outre divisée en une pluralité de zones de formation, et la tête de balayage étant déplacée de manière alternée vers des zones de formation non adjacentes l'une à l'autre à l'intérieur des zones de formation divisées pour irradiation par des faisceaux lumineux.
